# EUROPEAN PATENT APPLICATION

(11) **EP 4 560 767 A1**
(43) Date of publication of application: **28.05.2025**
(21) Application number: 23860763.4
(22) Date of filing: 23.08.2023
(51) Int. Cl.: H01M 10/0567, H01M 10/052, H01M 4/525, H01M 4/505

(54) **NON-AQUEOUS ELECTROLYTE FOR LITHIUM SECONDARY BATTERY, AND LITHIUM SECONDARY BATTERY COMPRISING SAME**

(30) Priority: 02.09.2022 KR 20220111719; 18.08.2023 KR 20230108612
(71) Applicant: LG Energy Solution, Ltd., Seoul 07335 (KR)
(72) Inventor: PARK, Sung Guk, Daejeon 34122 (KR); LEE, Chul Haeng, Daejeon 34122 (KR); LEE, Jung Hoon, Daejeon 34122 (KR)
(74) Representative: Hoffmann Eitle
(86) International application number: PCT/KR2023/012451
(87) International publication number: WO 2024/049086

(57) **Abstract**

The present disclosure provides a non-aqueous electrolyte solution for a lithium secondary battery and a lithium secondary battery including the same. Specifically, the non-aqueous electrolyte solution for a lithium secondary battery of the present disclosure may comprising a lithium salt, an organic solvent and a compound represented by Formula 1 as a first additive. The present disclosure also provides a lithium secondary battery having improved high-temperature storage characteristics and high-temperature cycle characteristics by comprising the non-aqueous electrolyte solution for a lithium secondary battery.

## Description

### [TECHNICAL FIELD]

### Cross-reference to Related Applications

This application claims priority from Korean Patent Application No. 10-2022-0111719, filed on September 2, 2022 and Korean Patent Application No. 10-2023-0108612, filed on August 18, 2023, the disclosures of which are incorporated by reference herein.

### Technical field

The present disclosure relates to a non-aqueous electrolyte solution for a lithium secondary battery and a lithium secondary battery including the same.

### [BACKGROUND ART]

As dependence on electric energy is increasing in modern society, development of a large-capacity power storage device that can stably supply power and increase production is in the spotlight.

Lithium-ion batteries are a power storage device with the highest energy density that has been commercialized among power storage devices, and thus has been applied to various fields such as small electronic products, electric vehicles (EV) and power storage devices.

In particular, high output characteristics are required for lithium ion batteries applied to electric vehicles, while maintaining cycle characteristics and performance in various environments.

The lithium-ion battery includes a positive electrode comprised of a transition metal oxide containing lithium, a negative electrode capable of storing lithium, a non-aqueous electrolyte solution comprising an organic solvent containing a lithium salt, and a separator.

Lithium hexafluorophosphate (LiPF₆), which is mainly used as the lithium salt is easily decomposed at high temperatures to produce Lewis acid by-products such as HF and PF₅, and the by-products react with moisture to cause more Lewis acid by-products (HF).

Such Lewis acid by-products may erode a passivation film formed on the electrode and its surface, thereby causing the elution of transition metal ions from the positive electrode. The eluted transition metal ions promote the decomposition of the electrolyte solvent, thereby accelerating gas generation, or are re-deposited on the positive electrode, thereby increasing the resistance of the positive electrode, and also, are transferred to the negative electrode through the electrolyte solution and then deposited on the negative electrode, thereby causing additional consumption of lithium ions due to self-discharging of the negative electrode, destruction and regeneration of a solid electrolyte interphase (SEI) film, etc., resistance increase, and the like.

Since a series of such reactions reduces the amount of available lithium ions in a battery, it may be the main cause of capacity degradation of the battery. In addition, in the case where the metal ions electrodeposited on the negative electrode grow into dendrites, they cause an internal short circuit of the battery which leads to a reduction in the battery safety. Therefore, there is a demand for a non-aqueous electrolyte solution capable of improving battery performance such as high-rate charging/discharging properties as well as safety by scavenging by-products (HF, PF₅, etc.) generated due to thermal decomposition of a lithium salt, and at the same time, by forming a stable film on the electrode surface to suppress the elution of transition metals, or to suppress the deposition of the eluted transition metal ions on the negative electrode.

### [DISCLOSURE OF THE INVENTION]

### [TECHNICAL PROBLEM]

The present disclosure aims to provide a non-aqueous electrolyte solution for a lithium secondary battery comprising an additive having the excellent effects of removing highly reactive Lewis acid by-products or acidic materials formed as the decomposition products of a salt in the electrolyte solution while forming a stable film on the electrode surface.

Also, the present disclosure aims to provide a lithium secondary battery with enhanced high-temperature storage characteristics and high-temperature cycle characteristics by including the non-aqueous electrolyte solution for a lithium secondary battery.

### [TECHNICAL SOLUTION]

In order to achieve the above objects, in one embodiment of the present disclosure, it provides a non-aqueous electrolyte solution for a lithium secondary battery comprising a lithium salt, an organic solvent and a first additive wherein the first additive includes a compound represented by the following Formula 1.

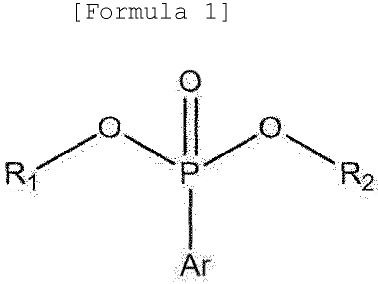

In Formula 1,
Ar is a 5-membered or 6-membered nitrogen-containing ring, and
R₁ and R₂ are each independently an alkyl group having 1 to 8 carbon atoms.

In another embodiment of the present disclosure, it provides a lithium secondary battery comprising a positive electrode including a positive electrode active material; a negative electrode containing a negative electrode active material; a separator interposed between the negative electrode and the positive electrode; and the non-aqueous electrolyte solution for a lithium secondary battery.

### [ADVANTAGEOUS EFFECTS]

The non-aqueous electrolyte solution of the present disclosure includes a compound containing a 5-membered or 6-membered nitrogen-containing ring group and a phosphoryl group in its structure as an additive, thereby effectively removing Lewis acid by-products, which are the by-products of electrolyte salts, and also has the effects of suppressing the elution of metals by forming a solid SEI and of reducing gases by suppressing side reactions between the electrolyte solution and the electrode, thereby improving the deterioration of the battery due to electrode degradation. Thus, if the non-aqueous electrolyte solution for a lithium secondary battery of the present disclosure is applied, a lithium secondary battery in which the cycle characteristics and high-temperature storage safety are improved may be achieved.

### [MODE FOR CARRYING OUT THE INVENTION]

Hereinafter, the present disclosure will be described in more detail.

The terms used herein are used only to describe exemplary embodiments, and are not intended to limit the present disclosure.

For example, it should be appreciated that the terms such as "including", "comprising", or "having" as used herein are intended to embody specific features, numbers, steps, elements, and/or combinations thereof, and to allow other components to be added unless the terms are used with the term "only."

Also, in the present specification, the expression "%" denotes wt % unless explicitly stated otherwise.

Also, unless otherwise defined in the specification, the expression "substitution" denotes that at least one hydrogen bonded to carbon is substituted with an element other than hydrogen, for example, an alkyl group having 1 to 5 carbon atoms or a fluorine element.

While decomposition products such as hydrogen fluoride (HF), formed through the hydro/thermal decomposition of conventional lithium salts, form a film on the electrode surface, transition metals constituting the positive electrode may be easily eluted in the electrolyte solution, and the eluted transition metal ions are re-deposited on the positive electrode to be a cause of increasing resistance of the positive electrode. Since the transition metals moved to the negative electrode through the electrolyte solution are electrodeposited on the negative electrode to self-discharge the negative electrode and destruct a solid electrolyte interphase (SEI) that gives passivation ability to the negative electrode, interfacial resistance of the negative electrode is increased by promoting an additional electrolyte solution decomposition reaction.

Since such a series of reactions reduce the amount of available lithium ions in the battery, the capacity of the battery is not only degraded, but a further electrolyte decomposition reaction is carried out, thereby leading to an increase in the resistance.

The present disclosure aims to provide a non-aqueous electrolyte solution for a lithium secondary battery, which oxidizes and decomposes before the organic solvent to form a solid film on the positive electrode surface by including an additive that can effectively scavenge the decomposition product of electrolyte salts, which causes such degradation and failure behavior, and a lithium secondary battery in which the high-rate charging and discharging at high temperatures are improved by including the same.

### Non-aqueous Electrolyte Solution for Lithium Secondary Battery

Specifically, in one embodiment of the present disclosure, the present disclosure provides a non-aqueous electrolyte solution for a lithium secondary battery which includes a lithium salt, an organic solvent, and a first additive, wherein a compound represented by the following Formula 1 is included as the first additive.

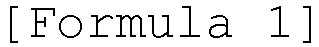

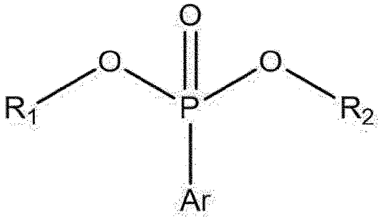

In Formula 1,
Ar is a 5-membered or 6-membered nitrogen-containing ring, and
R₁ and R₂ are each independently an alkyl group having 1 to 8 carbon atoms.

### (1) Lithium Salt

First, in the non-aqueous electrolyte solution for a lithium secondary battery of the present disclosure, any lithium salt typically used in an electrolyte solution for a lithium secondary battery may be used as the lithium salt without limitation, and, for example, the lithium salt may include Li⁺ as a cation, and may include at least one selected from F⁻, Cl⁻, Br⁻, I⁻, NO₃⁻, N(CN)₂⁻, BF₄⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂) ₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ or SCN⁻ as an anion.

Specifically, the lithium salt may include a single material selected from LiCl, LiBr, LiI, LiBF₄, LiClO₄, LiB₁₀Cl₁₀, LiAlCl₄, LiAlO₄, LiPF₆, LiCF₃SO₃, LiCH₃CO₂, LiCF₃CO₂, LiAsF₆, LiSbF₆, LiCH₃SO₃, LiN(SO₂F) ₂ (Lithium bis (fluorosulfonyl) imide, LiFSI), LiN(SO₂CF₂CF₃)₂ (lithium bis (pentafluoroethanesulfonyl) imide, LiBETI) and LiN(SO₂CF₃)₂ (lithium bis(trifluoromethane sulfonyl)imide, LiTFSI) or a mixture of two or more thereof, preferably one or two or more of LiBF₄, LiPF₆, LiN(SO₂F)₂ (LiFSI), LiN(SO₂CF₂CF₃)₂ (LiBETI), and LiN(SO₂CF₃)₂ (LiTFSI). In addition to them, any lithium salt commonly used in an electrolyte solution for a lithium secondary battery may be used without limitation.

The lithium salt may be appropriately changed in a normally usable range, but may be included in a concentration of 0.8 M to 4.0 M, and specifically, 1.0 M to 3.0 M in the electrolyte solution to obtain an optimum effect of forming a film for preventing corrosion of an electrode surface.

When the concentration of the lithium salt is in the above range, the viscosity of the non-aqueous electrolyte solution may be controlled to achieve the optimal impregnability, and the effects of improving the capacity and cycle characteristics of a lithium secondary battery may be obtained by improving the mobility of lithium ions.

### (2) Organic Solvent

Further, the organic solvent will be described.

Various organic solvents typically used in a non-aqueous electrolyte solution may be used as the non-aqueous organic solvent without limitation. The non-aqueous organic solvent is not limited as long as it may minimize decomposition due to an oxidation reaction during the charge and discharge of the secondary battery and may exhibit desired characteristics with the additive.

Specifically, the non-aqueous organic solvent may include a cyclic carbonate-based organic solvent, a linear carbonate-based organic solvent, or a mixed organic solvent thereof.

The cyclic carbonate-based organic solvent is a highly viscous organic solvent, which may well dissociate the lithium salt in a non-aqueous electrolyte solution due to the high permittivity, wherein specific examples thereof may be at least one organic solvent selected from ethylene carbonate (EC), propylene carbonate (PC), 1,2-butylene carbonate, 2,3-butylene carbonate, 1,2-pentylene carbonate, 2,3-pentylene carbonate, and vinylene carbonate, and may include at least one from ethylene carbonate (EC) and propylene carbonate (PC) among them.

The linear carbonate-based organic solvent is an organic solvent having low viscosity and low permittivity, wherein typical examples thereof may be at least one organic solvent selected from dimethyl carbonate (DMC), diethyl carbonate (DEC), dipropyl carbonate, ethyl methyl carbonate (EMC), methylpropyl carbonate, and ethylpropyl carbonate, and specially may include at least one of dimethyl carbonate and ethyl methyl carbonate.

In the present disclosure, in order to secure a high ionic conductivity, a mixture of the cyclic carbonate-based organic solvent and the linear carbonate-based organic solvent may be used, and in this case, it may include in a mixing ratio of 10:90 to 50:50 by volume, and specifically 20:80 to 40:60 by volume.

Furthermore, the organic solvent may further include at least one organic solvent of a linear ester-based organic solvent and a cyclic ester-based organic solvent, which have lower melting point and higher storage stability at high temperatures compared to the cyclic carbonate-based organic solvent and/or the linear carbonate-based organic solvent, to prepare an electrolyte solution having a high ionic conductivity.

Specific examples of the linear ester-based organic solvent may be at least one organic solvent selected from methyl acetate, ethyl acetate, propyl acetate, methyl propionate, ethyl propionate, propyl propionate, or butyl propionate, wherein specific examples thereof may include at least one of ethyl propionate and propyl propionate.

The cyclic ester-based organic solvent may include at least one organic solvent selected from γ-butyrolactone, γ-valerolactone, γ-caprolactone, σ-valerolactone, or ε-caprolactone.

In the non-aqueous electrolyte solution of the present disclosure, a remainder except for the lithium salt, first additive, and second additive may be all organic solvents unless otherwise stated.

### (3) First Additive

The first additive of the present disclosure may include a compound represented by the following Formula 1.

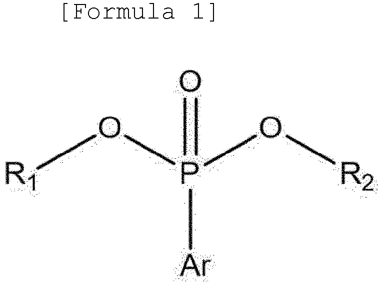

In Formula 1,
Ar is a 5-membered or 6-membered nitrogen-containing ring, and
R₁ and R₂ are each independently an alkyl group having 1 to 8 carbon atoms.

The 5-membered or 6-membered nitrogen-containing ring included in the structure of the compound represented by Formula 1 is a functional group that functions as a Lewis base, and may suppress the formation of Lewis acid substances, such as HF generated by the decomposition of PF₅ while the non-shared electron pair of the nitrogen atom binds to PF₅. As a result, this may suppress the deterioration behavior due to chemical reactions of the film on the positive electrode or negative electrode surface resulting from the Lewis acids, which also enables to prevent an additional electrolyte decomposition of the battery due to deterioration or destruction of the film, and further to improve high-temperature storage characteristics by alleviating the self-discharge of the secondary battery.

In addition, the compound represented by Formula 1 contains a phosphoryl group in its structure capable of forming an inorganic film on the surface of the negative electrode, which suppresses side reactions between the electrolyte solution and the electrode, thereby having a gas reduction effect and preventing battery deterioration.

In particular, the compound represented by Formula 1 forms a passivation film having a high passivation ability on the negative and positive electrode surfaces while functional groups, such as the nitrogen-containing ring or phosphoryl group, are reduced and decomposed, thereby preventing the self-discharge reaction of the negative electrodes caused by the additional reduction decomposition reaction of the electrolyte due to the instability of the SEI and preventing the elution of metal ions from the positive electrode and suppressing the eluted metal ions from being electrodeposited on the negative electrode. As such, the effect of improving the high-temperature durability of a lithium secondary battery such as cycle characteristics and capacity characteristics may be achieved.

The compound represented by Formula 1 may be represented by Formula 1A.

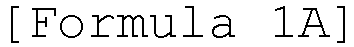

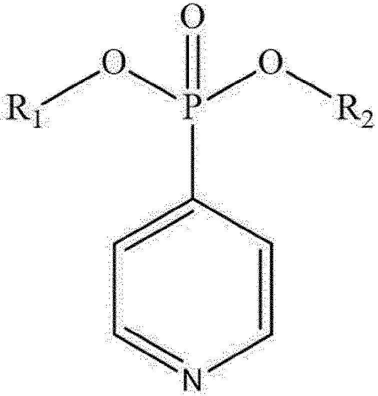

In Formula 1A, R₁ and R₂ are each independently an alkyl group having 1 to 8 carbon atoms.

In addition, in Formula 1A, R₁ and R₂ are each independently an alkyl group having 1 to 5 carbon atoms.

In addition, in Formula 1A, R₁ and R₂ are each independently an alkyl group having 1 to 3 carbon atoms.

Preferably, the compound represented by Formula 1A may be one of a compound represented by Formula 1A-1 or a compound represented by Formula 1A-2.

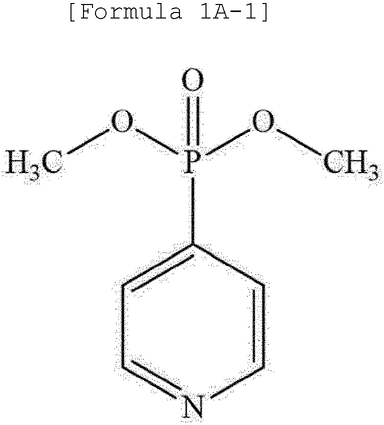

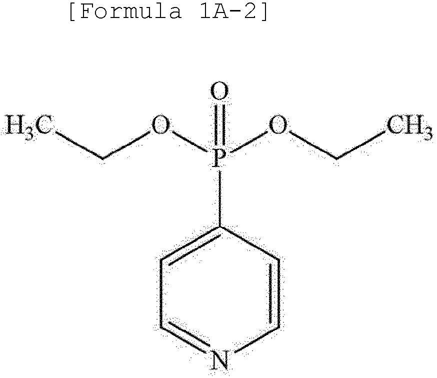

The compound represented by Formula 1 may be present in an amount of 0.5 wt% to 3.0 wt% based on the total weight of the non-aqueous electrolyte solution.

In the case in which the compound represented by Formula 1 is present in the above range, a secondary battery with improved overall performance may be prepared by forming a robust film on the negative electrode and positive electrode while preventing side reactions due to additives and effectively preventing the deterioration of the negative electrode during rapid charging and discharging. Specifically, if the content of the compound represented by Formula 1 is 0.5 wt% or more, it may maintain the effects of scavenging the thermal decomposition products of lithium salts such as HF or PF₅ during battery operation time and of forming a film on the surfaces of the negative electrode and positive electrode more stably. When the content of the compound represented by Formula 1 is 3.0 wt% or less, it is possible to control the viscosity of the non-aqueous electrolyte solution so as to achieve optimal impregnability, to effectively suppress an increase in the battery resistance due to decomposition of additives, and to prevent degradation of rate characteristics or low-temperature life characteristics by not reducing the ionic conductivity of the electrolyte.

More specifically, the compound represented by Formula 1 may be present in an amount of 0.5 wt% to 2.5 wt%, more preferably in an amount of 0.5 wt% to 2.0 wt%.

### (4) Second Additive

Furthermore, in order to prevent a non-aqueous electrolyte solution from being decomposed to cause the collapse of the negative electrode in a high output environment, or further improve low-temperature high-rate discharge characteristics, high-temperature stability, overcharge protection, and an effect of suppressing battery swelling at high temperatures, the non-aqueous electrolyte solution for a lithium secondary battery of the present disclosure may further include second additives in the non-aqueous electrolyte solution, if necessary.

As typical examples, the second additive may include at least one second additive selected from a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, or a lithium salt-based compound.

The cyclic carbonate-based compound may include vinylene carbonate (VC) or vinyl ethylene carbonate.

The halogen-substituted carbonate-based compound may be fluoroethylene carbonate (FEC).

The sultone-based compound may include at least one compound selected from 1,3-propane sultone (PS), 1,4-butane sultone, ethene sultone, 1,3-propene sultone (PRS), 1,4-butene sultone, or 1-methyl-1,3-propene sultone.

The sulfate-based compound may include ethylene sulfate (Esa), trimethylene sulfate (TMS), or methyl trimethylene sulfate (MTMS).

The phosphate-based compound may include at least one compound selected from lithium difluoro bis(oxalato)phosphate, lithium difluoro phosphate, tris(trimethylsilyl) phosphate, tris(2,2,2-trifluoroethyl)phosphate, and tris(trifluoroethyl)phosphate.

The borate-based compound may include tetraphenyl borate and lithium oxalyldifluoroborate.

The nitrile-based compound may include at least one compound selected from succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, the amine-based compound may include triethanolamine or ethylenediamine.

The silane-based compound may include tetravinylsilane.

The lithium salt-based compound is a compound different from the lithium salt included in the non-aqueous electrolyte solution, wherein the lithium salt compound may include at least one compound selected from LiPO₂F₂, LiODFB, LiBOB (lithium bis(oxalato)borate (LiB(C₂O₄)₂), or LiBF₄.

Among these second additives, in the case in which, at least one of vinylene carbonate, vinyl ethylene carbonate, or succinonitrile is included, a more robust SEI may be formed on the surface of the negative electrode during the initial activation process of the secondary battery.

Two or more second additives may be mixed and used, and the additive may be present in an amount of 50 wt% or less, specifically 0.01 wt % to 10 wt %, and preferably 0.05 wt % to 5.0 wt % based on the total weight of the non-aqueous electrolyte solution. If the amount of the additive is less than 0.01 wt %, an effect of improving low-temperature output, high-temperature storage characteristics, and high-temperature life characteristics of the battery is insignificant. If the amount of the second additive is greater than 50 wt %, the side reactions in the electrolyte solution may excessively occur during the charging and discharging of the battery. Particularly, if the excessive amount of the additives for forming an SEI is added, the additives may not be sufficiently decomposed at high temperatures so that they may be present in the form of an unreacted material or being precipitated in the electrolyte solution at room temperature. Accordingly, side reactions that degrade life or resistance characteristics of the secondary battery may occur.

### Lithium Secondary Battery

Also, in another embodiment of the present disclosure, the present disclosure provides a lithium secondary battery comprising the non-aqueous electrolyte solution of the present disclosure.

The lithium secondary battery of the present disclosure may be prepared according to a conventional method known in the art. Specifically, after forming an electrode assembly, in which the positive electrode, negative electrode, and separator between the positive electrode and the negative electrode are sequentially stacked, and accommodating the electrode assembly in a battery case, the lithium secondary battery of the present disclosure may be prepared by injecting the non-aqueous electrolyte solution of the present disclosure thereinto.

Next, each component of the lithium secondary battery of the present disclosure will be specifically described.

### (1) Positive Electrode

The positive electrode according to the present disclosure may include a positive electrode active material layer including a positive electrode active material, and, if necessary, the positive electrode active material layer may further include a conductive agent and/or a binder.

The positive electrode active material is a compound capable of reversibly intercalating and deintercalating lithium, wherein the positive electrode active material may specifically include a lithium composite metal oxide including lithium and at least one metal selected from nickel (Ni), cobalt (Co), manganese (Mn), iron (Fe), and aluminum (Al), such as represented by the following Formula 2.

[Formula 2] Li₁₊ₐNiₓCo_{y}M¹_{z}M²_{w}O₂

In Formula 2,
M¹ is Mn, Al or a combination thereof,
M² is at least one selected from Al, Zr, W, Ti, Mg, Ca and Sr, wherein 0≤a≤0.5, 0.55<x<1.0, 0<y≤0.4, 0<z≤0.4, 0≤w≤0.1.
1+a represents an atomic fraction of lithium in a lithium transition metal oxide, and may be 0≤a≤0.5, preferably 0≤a≤0.2, and more preferably 0≤a≤0.1.
x represents an atomic fraction of nickel among all transition metal elements in the lithium transition metal oxide, and may be 0.55<x<1.0, more specifically 0.6≤x≤0.98, and even more specifically 0.6 ≤x≤0.95.
y represents an atomic fraction of cobalt among all transition metal elements in the lithium transition metal oxide, and may be 0<y≤0.4, specifically 0<y≤0.3, and more specifically 0.05≤y≤0.3.
z represents an atomic fraction of the element M¹ among all transition metal elements in the lithium transition metal oxide, and may be 0<z≤0.4, preferably 0<z≤0.3, and more preferably 0.01≤z≤0.3.
w represents an atomic fraction of the element M² among all transition metal elements in the lithium transition metal oxide, and may be 0<w≤0.1, preferably 0<w≤0.05, and more preferably 0<w≤0.02.

Specifically, the positive electrode active material may include a lithium composite transition metal oxide such as Li(Ni_{0.6}Mn_{0.2}CO_{0.2})O₂, Li(Ni_{0.7}Mn_{0.15}Co_{0.15})O₂, Li(Ni_{0.7}Mn_{0.2}CO_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}CO_{0.05}Al_{0.02})O₂ or Li(Ni_{0.90}Mn_{0.05}Co_{0.05})O₂ having a Ni content of 0.55 atm% or more to achieve a high capacity battery.

As the positive electrode active material of the present disclosure, a lithium-manganese-based oxide (e.g., LiMnO₂, LiMn₂O₄, etc.), a lithium-cobalt-based oxide (e.g., LiCoO₂, etc.), a lithium-nickel-based oxide (e.g., LiNiO₂, etc.), a lithium-nickel-manganese-based oxide (e.g., LiNi_{1-Y}Mn_{Y}O₂(0<Y<1), LiMn_{2-z}Ni_{z}O₄(0<Z<2)), a lithium-nickel-cobalt-based oxide (e.g., LiNi_{1-Y1}Co_{Y1}O₂(0<Y1<1)), a lithium-manganese-cobalt-based oxide (e.g., LiCo_{1-Y2}Mn_{Y2}O₂(0<Y2<1), LiMn_{2-z1}Co_{z1}O₄(0<Z1<2), or Li(Niₚ₁Co_{q1}Mnᵣ₂)O₄(0<p1<2, 0<q1<2, 0<r2<2, p1+q1+r2=2) may be used together with a lithium composite metal oxide represented by Formula 2 above.

The positive electrode active material may be present in an amount of 80 wt% to 98 wt%, and more specifically, 85 wt% to 98 wt% based on the total weight of the positive electrode active material layer. When the amount of the positive electrode active material is present in the above range, the excellent capacity characteristics may be exhibited.

Next, the conductive agent is used to provide conductivity to the electrode, wherein any conductive agent may be used without particular limitation as long as it has suitable electron conductivity without causing adverse chemical changes in the battery. Specific examples of the conductive agent may be a conductive material, such as: carbon black such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, or nickel powder; conductive whiskers such as zinc oxide whiskers and potassium titanate whiskers; conductive metal oxide such as titanium oxide; or polyphenylene derivatives, and any one thereof or a mixture of two or more thereof may be used.

The conductive agent may be present in an amount of 0.1 wt% to 10 wt%, preferably, 0.1 wt% to 5.0 wt% based on a total weight of the positive electrode active material layer.

Next, the binder improves the adhesion between positive electrode active material particles and the adhesion between the positive electrode active material and a current collector.

As an example of the binder, any one of a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder or a mixture of two or more thereof may be used.

The binder may be present in an amount of 0.1 wt% to 15 wt%, preferably, 0.1 wt% to 10 wt% based on the total weight of the positive electrode active material layer.

The positive electrode of the present disclosure as described above may be prepared by a method of preparing a positive electrode which is known in the art. For example, the positive electrode may be prepared by a method in which a positive electrode collector is coated with a positive electrode slurry, which is prepared by dissolving or dispersing the positive electrode active material, the binder, and/or the conductive agent in a solvent, dried, and then rolled to form an active material layer, or a method in which the positive electrode active material layer is cast on a separate support and a film separated from the support is then laminated on the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode material. The positive electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if a positive electrode material mixture may be adjusted to have appropriate viscosity in consideration of a coating thickness of the positive electrode material mixture, manufacturing yield, and workability, and is not particularly limited.

### (2) Negative Electrode

Next, a negative electrode will be described.

The negative electrode according to the present disclosure includes a negative electrode active material layer including a negative electrode active material, and the negative electrode active material layer may further include a conductive agent and/or a binder, if necessary.

Various negative electrode active materials used in the art, for example, a carbon-based negative electrode active material, a silicon-based negative electrode active material, or a mixture thereof may be used as the negative electrode active material.

According to an embodiment, the negative electrode active material may include a carbon-based negative electrode active material, and, as the carbon-based negative electrode active material, various carbon-based negative electrode active materials used in the art, for example, a graphite-based materials such as natural graphite, artificial graphite, and Kish graphite; pyrolytic carbon, mesophase pitch based carbon fiber, meso-carbon microbeads, mesophase pitches, high-temperature sintered carbon such as petroleum or coal tar pitch derived cokes, soft carbon, and hard carbon may be used. A shape of the carbon-based negative electrode active material is not particularly limited, and materials of various shapes, such as an irregular shape, planar shape, flaky shape, spherical shape, or fibrous shape, may be used.

Preferably, at least one carbon-based negative electrode active material of natural graphite and artificial graphite may be used as the negative electrode active material, and the natural graphite and artificial graphite may be used together to suppress the exfoliation of the active material by increasing adhesion with the current collector.

According to another embodiment, a carbon-based negative electrode active material and a silicon-based negative electrode active material may be used together for the negative electrode active material.

The silicon-based negative electrode active material, for example, may include at least one selected from metallic silicon (Si), silicon oxide (SiOₓ, where 0<x<2), silicon carbide (SiC), and a Si-Y alloy (where Y is an element selected from alkali metal, alkaline earth metal, a Group 13 element, a Group 14 element, transition metal, a rare earth element, and a combination thereof, and is not Si). The element Y may be selected from Mg, Ca, Sr, Ba, Ra, Sc, Y, Ti, Zr, Hf, Rf, V, Nb, Ta, Db (dubnium), Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

Since the silicon-based negative electrode active material has higher capacity characteristics than the carbon-based negative electrode active material, better capacity characteristics may be obtained when the silicon-based negative electrode active material is further included. However, with respect to a negative electrode including the silicon-based negative electrode active material, it contains more oxygen O-rich components in the SEI than a graphite negative electrode, and the SEI containing the O-rich components tends to be more easily decomposed when a Lewis acid, such as HF or PF₅, is present in the electrolyte solution. Thus, with respect to the negative electrode containing the silicon-based negative electrode active material, there is a need to suppress the formation of the Lewis acid, such as HF and PF₅, in the electrolyte solution or remove (or scavenge) the formed Lewis acid in order to stably maintain the SEI. Since the non-aqueous electrolyte solution according to the present disclosure includes the electrolyte solution additive having an excellent effect of removing Lewis acids while forming a stable film on the positive electrode and the negative electrode, it may effectively suppress the decomposition of the SEI film when the negative electrode containing the silicon-based negative electrode active material is used.

A mixing ratio of the silicon-based negative electrode active material to the carbon-based negative electrode active material may be in a range of 3:97 to 99:1, preferably, 5:95 to 15:85, as a weight ratio. When the mixing ratio of the silicon-based negative electrode active material to the carbon-based negative electrode active material satisfies the above range, since the volume expansion of the silicon-based negative electrode active material is suppressed while the capacity characteristics are improved, the excellent cycle performance may be secured.

The negative electrode active material may be present in an amount of 80 wt% to 99 wt% based on the total weight of the negative electrode active material layer. In the case in which the amount of the negative electrode active material satisfies the above range, the excellent capacity characteristics and electrochemical properties may be obtained.

Next, the conductive agent is a component for further improving the conductivity of the negative electrode active material layer and may be added in an amount of 10 wt% or less, preferably, 5 wt% or less based on the total weight of the negative electrode active material layer. The conductive agent is not particularly limited as long as it has conductivity without causing adverse chemical changes in the battery. For example, a conductive material such as carbon black such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The binder is a component that assists in the binding between the conductive agent, the active material, and may be added in an amount of 0.1 wt % to 10 wt % based on the total weight of the negative electrode active material layer.

Examples of the binder may be a fluorine resin-based binder including polyvinylidene fluoride (PVDF) or polytetrafluoroethylene (PTFE); a rubber-based binder including a styrene-butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The binder may be commonly present in an amount of 0.1 wt % to 15 wt %, preferably 0.1 wt % to 10 wt % based on the total weight of the negative electrode active material layer.

The negative electrode may be prepared by a method of preparing a negative electrode which is known in the art. For example, the negative electrode may be prepared by a method in which a negative electrode collector is coated with a negative electrode slurry, which is prepared by dissolving or dispersing the negative electrode active material as well as optionally the binder and the conductive agent in a solvent, rolled and dried, or may be prepared by casting the negative electrode slurry on a separate support and then laminating a film separated from the support on the negative electrode collector.

The negative electrode current collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. The negative electrode current collector may typically have a thickness of 3 µm to 500 µm, and, similar to the positive electrode current collector, microscopic irregularities may be formed on the surface of the current collector to improve the adhesion of the negative electrode active material. The negative electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the negative electrode slurry may be adjusted to have an appropriate viscosity in consideration of a coating thickness of the negative electrode material mixture, manufacturing yield, and workability, and is not particularly limited.

### (3) Separator

The lithium secondary battery according to the present disclosure includes a separator between the positive electrode and the negative electrode.

The separator separates the negative electrode and the positive electrode, and provides a movement path for lithium ions. Any separator may be used without particular limitation as long as it is typically used as a separator in a lithium secondary battery. Particularly, a separator having high moisture-retention ability for an electrolyte solution as well as low resistance to the movement of electrolyte ions is desirable.

Specifically, as the separator, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith, and a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and may be optionally used as a single layer or a multilayered structure.

The lithium secondary battery according to the present disclosure as described above may be suitably used in portable devices, such as mobile phones, notebook computers, and digital cameras, and electric cars such as hybrid electric vehicles (HEVs).

A shape of the lithium secondary battery of the present disclosure is not particularly limited, but a cylindrical type using a can, a prismatic type, a pouch type, or a coin type may be used.

The lithium secondary battery according to the present disclosure may not only be used in a battery cell that is used as a power source of a small device, but may also be preferably used as a unit cell in a medium and large sized battery module including a plurality of battery cells.

### Examples

### Example 1.

### (Preparation of Non-aqueous Electrolyte Solution)

LiPF₆ was dissolved in a non-aqueous organic solvent, in which ethylene carbonate (EC) and ethylmethyl carbonate (EMC) were mixed in a volume ratio of 30:70, such that a concentration of the LiPF₆ was 1.0M, and a non-aqueous electrolyte solution was prepared by adding 0.5 wt% of the compound represented by Formula 1A-1 and 0.5 wt% of vinylene carbonate (VC) (see Table 1).

### (Secondary Battery Preparation)

A positive electrode active material (Li(Ni_{0.9}Mn_{0.03}Co_{0.06}Al_{0.01})O₂), a conductive agent (carbon black), and a binder (polyvinylidene fluoride) were added to N-methyl-2-pyrrolidone (NMP) in a weight ratio of 97.6:0.8:1.6 to prepare a positive electrode slurry (solid content: 60 wt %). A 13.5 µm thick aluminum (Al) thin film, which is a positive electrode current collector, was coated with the positive electrode slurry, dried, and then roll-pressed to prepare a positive electrode.

A negative electrode active material (graphite:SiO = 94:6 weight ratio), a binder (SBR-CMC), and a conductive agent (carbon black) were added to water, which is a solvent, in a weight ratio of 97.6:0.8:1.6 to prepare a negative electrode slurry (solid content: 60 wt %). A 6 µm thick copper (Cu) thin film, which is a negative electrode current collector, was coated with the negative electrode slurry, dried, and then roll-pressed to prepare a negative electrode.

After an electrode assembly was prepared by disposing a porous polypropylene separator between the prepared positive electrode and the negative electrode, the electrode assembly was accommodated in a battery case, and then the non-aqueous electrolyte solution for a lithium secondary battery of the present disclosure was injected thereto to prepare a lithium secondary battery.

### Example 2.

### (Preparation of Non-aqueous Electrolyte Solution)

LiPF₆ was dissolved in a non-aqueous organic solvent such that a concentration of the LiPF₆ was 1.0M, and a non-aqueous electrolyte solution was prepared by adding 1.0 wt% of the compound represented by Formula 1A-1 and 0.5 wt% of vinylene carbonate (VC).

### (Secondary Battery Preparation)

A lithium secondary battery was prepared in the same manner as in Example 1 except that the above prepared non-aqueous electrolyte solution was injected instead of the non-aqueous electrolyte solution of Example 1 (see Table 1 below).

### Comparative Example 1.

### (Preparation of Non-aqueous Electrolyte Solution)

LiPF₆ was dissolved in a non-aqueous organic solvent such that a concentration of the LiPF₆ was 1.0M, and a non-aqueous electrolyte solution was prepared by adding 0.5 wt% of vinylene carbonate (VC) as an additive.

### (Secondary Battery Preparation)

A lithium secondary battery was prepared in the same manner as in Example 1 except that the above prepared non-aqueous electrolyte solution was injected instead of the non-aqueous electrolyte solution of Example 1 (see Table 1 below).

### Comparative Example 2.

### (Preparation of Non-aqueous Electrolyte Solution)

LiPF₆ was dissolved in a non-aqueous organic solvent such that a concentration of the LiPF₆ was 1.0M, and a non-aqueous electrolyte solution was prepared by adding 0.5 wt% of the compound represented by Formula 3 below and 0.5 wt% of vinylene carbonate (VC) instead of the compound represented by Formula 1A-1 as an additive.

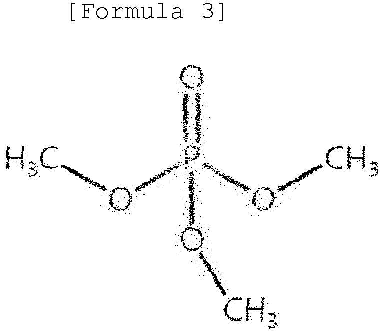

### (Secondary Battery Preparation)

A lithium secondary battery was prepared in the same manner as in Example 1 except that the above prepared non-aqueous electrolyte solution was injected instead of the non-aqueous electrolyte solution of Example 1 (see Table 1 below).

### Comparative Example 3.

### (Preparation of Non-aqueous Electrolyte Solution)

LiPF₆ was dissolved in a non-aqueous organic solvent such that a concentration of the LiPF₆ was 1.0M, and a non-aqueous electrolyte solution was prepared by adding 0.5 wt% of the compound represented by Formula 4 below and 0.5 wt% of vinylene carbonate (VC) instead of the compound represented by Formula 1A-1 as an additive.

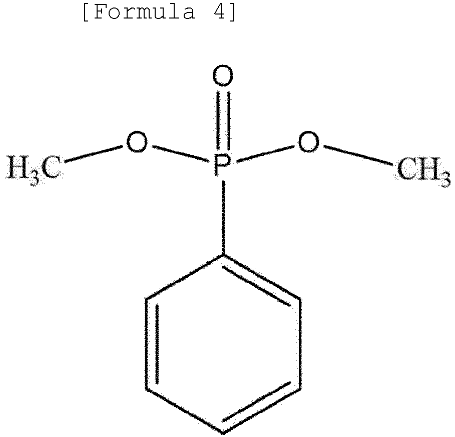

### (Secondary Battery Preparation)

A lithium secondary battery was prepared in the same manner as in Example 1 except that the above prepared non-aqueous electrolyte solution was injected instead of the non-aqueous electrolyte solution of Example 1 (see Table 1 below).

**[Table 1]**

| | Non-aqueous organic solvent | Additive | | Other additives (wt%) |
|---|---|---|---|---|
| | | Types | Content (wt%) | |
| Example 1 | EC:EMC=30:70 volume ratio | Formula 1A-1 | 0.5 | VC (0.5) |
| Example 2 | | Formula 1A-1 | 1.0 | |
| Comparative Example 1 | | - | - | |
| Comparative Example 2 | | Formula 3 | 0.5 | |
| Comparative Example 3 | | Formula 4 | 0.5 | |

In Table 1, the abbreviation of each compound has the following meaning.
EC: Ethylene Carbonate
EMC: Ethylmethyl Carbonate
VC: Vinylene Carbonate

### Experimental Examples

### Experimental Example 1. Evaluation of Resistance Increase Rate after High-Temperature storage

After a formation process was performed for the lithium secondary batteries prepared in the Examples and Comparative Examples under the conditions of charging at a rate of 0.1 C for 3 hours, charging (0.05 C cut-off) was performed at a rate of 0.33 C to 4.2 V under a constant current/constant voltage condition at 25°C to be fully charged to SOC 100% and the batteries were stored at high temperatures (60°C) for 16 weeks. Subsequently, the resistance was measured by transferring the batteries to a charger and discharger at room temperature (25°C) and the resistance increase rate was calculated using Equation 1 below. The results are shown in Table 2 below. Resistance increase rate (%) = {(resistance after high temperature storage - initial resistance)/ initial resistance} × 100

### Experimental Example 2. Evaluation of Gas Generation Amount after High-Temperature Storage

After a formation process was performed for the lithium secondary batteries prepared in the Examples and Comparative Examples under the conditions of charging at a rate of 0.1 C for 3 hours, charging (0.05 C cut-off) was performed at a rate of 0.33 C to 4.2 V under a constant current/constant voltage condition at 25°C to be fully charged to SOC 100% and the batteries were stored at high temperatures (60°C) for 16 weeks. Subsequently, the gas generation amounts were measured by a GC analysis at room temperature (25°C). When the gas generation amount measured in Comparative Example 1 was set to be 100%, the relative gas generation amount of each of the batteries was calculated as a percentage and are shown in Table 2 below.

### Experimental Example 3. Evaluation of Capacity Retention Rate after High-Temperature Cycles

After a formation process was performed for the lithium secondary batteries prepared in the Examples and Comparative Examples under the conditions of charging at a rate of 0.1 C for 3 hours, charging (0.05 C cut-off) was performed at a rate of 0.33 C to 4.2 V under a constant current/constant voltage condition at 25°C to be fully charged to SOC 100%. The fully charged batteries were charged at a rate of 0.33 C to 4.2V under a constant current/constant voltage condition and were discharged at a rate of 0.33 C to 2.8V under a constant current condition at 45°C, which was set as one cycle. After 300 cycles were performed, the capacity retention rates after 300 cycles were calculated by using Equation 2 below, and the results are shown in Table 2 below. Capacity retention rate (%) = (capacity after 300 cycles/ capacity after 1 cycle) × 100

**[Table 2]**

| | Resistance increase rate (%) | Gas generation amount (%) | Capacity retention rate (%) |
|---|---|---|---|
| Example 1 | 14.04 | 72.5 | 89.9 |
| Example 2 | 13.29 | 70.2 | 90.2 |
| Comparative Example 1 | 32.84 | 100 | 88.3 |
| Comparative Example 2 | 28.11 | 94.3 | 88.4 |
| Comparative Example 3 | 24.54 | 90.1 | 88.8 |

Referring to Table 2 above, it may be understood that the secondary batteries prepared in Examples 1 and 2 of the present disclosure had reduced resistance increase rates (%) and gas generation amounts (%), and improved capacity retention rates (%) compared to those of Comparative Examples 1 to 3.

## Claims

1. A non-aqueous electrolyte solution for a lithium secondary battery, comprising a lithium salt, an organic solvent and a first additive, wherein the first additive includes a compound represented by Formula 1: 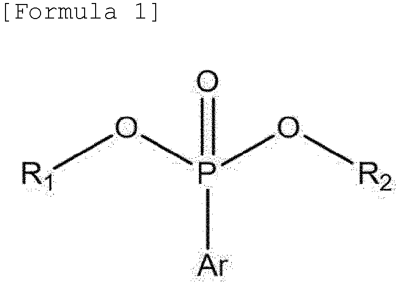 wherein Formula 1,
Ar is a 5-membered or 6-membered nitrogen-containing ring, and
R₁ and R₂ are each independently an alkyl group having 1 to 8 carbon atoms.

2. The non-aqueous electrolyte solution for a lithium secondary battery of claim 1,
wherein the compound represented by Formula 1 is a compound represented by Formula 1A: 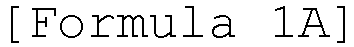 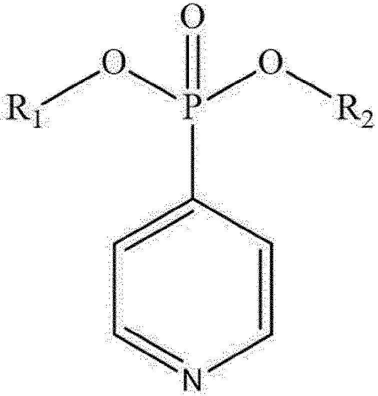
wherein Formula 1A,
R₁ and R₂ are each independently an alkyl group having 1 to 8 carbon atoms.

3. The non-aqueous electrolyte solution for a lithium secondary battery of claim 2,
wherein R₁ and R₂ are each independently an alkyl group having 1 to 5 carbon atoms.

4. The non-aqueous electrolyte solution for a lithium secondary battery of claim 2,
wherein R₁ and R₂ are each independently an alkyl group having 1 to 3 carbon atoms.

5. The non-aqueous electrolyte solution for a lithium secondary battery of claim 2,
wherein the compound represented by Formula 1A is a compound represented by Formula 1A-1 or represented by Formula 1A-2:

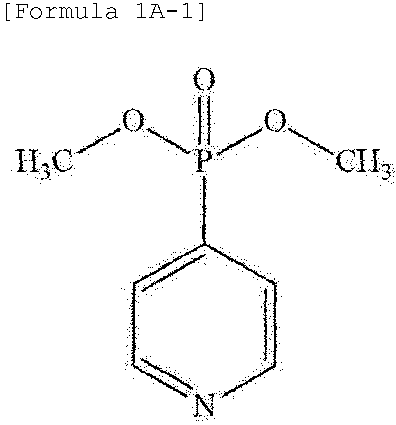

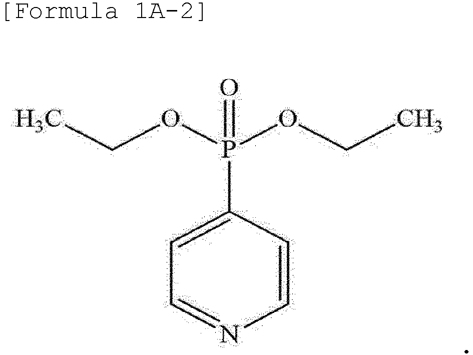

6. The non-aqueous electrolyte solution for a lithium secondary battery of claim 1,
wherein the compound represented by Formula 1 is present in an amount of 0.5 wt% to 3.0 wt% based on a total weight of the non-aqueous electrolyte solution for a lithium secondary battery.

7. The non-aqueous electrolyte solution for a lithium secondary battery of claim 6,
wherein the compound represented by Formula 1 is present in an amount of 0.5 wt% to 2.5 wt% based on a total weight of the non-aqueous electrolyte solution for a lithium secondary battery.

8. The non-aqueous electrolyte solution for a lithium secondary battery of claim 1, further comprising at least one second additive selected from a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, or a lithium salt-based compound.

9. A lithium secondary battery comprising:
a positive electrode including a positive electrode active material;
a negative electrode including a negative electrode active material;
a separator disposed between the negative electrode and the positive electrode;
and the non-aqueous electrolyte solution for a lithium secondary battery of claim 1.

10. The lithium secondary battery of claim 9, wherein the positive electrode active material includes lithium and at least one metal selected from nickel (Ni), cobalt (Co), manganese (Mn), iron (Fe), and aluminum (Al).
